# EUROPÄISCHE PATENTSCHRIFT

(11) **EP 2 753 881 B1**
(45) Veröffentlichungstag und Bekanntmachung des Hinweises auf die Patenterteilung: **04.11.2015**
(21) Anmeldenummer: 12784020.5
(22) Anmeldetag: 14.11.2012
(51) Int. Cl.: H01C 17/06, H01C 17/28, H05B 3/03, H05B 3/14, F24D 3/12, H05B 3/34

(54) **HEIZELEMENT UND VERFAHREN ZUM HERSTELLEN EINES HEIZELEMENTS**
HEATING ELEMENT AND METHOD FOR PRODUCING A HEATING ELEMENT
ÉLÉMENT CHAUFFANT ET PROCÉDÉ DE FABRICATION D'UN ÉLÉMENT CHAUFFANT

(30) Priorität: 16.11.2011 DE 102011086448
(43) Veröffentlichungstag der Anmeldung: 16.07.2014
(73) Patentinhaber: Thermofer GmbH & Co. KG, 50996 Köln (DE)
(72) Erfinder: ALTHAUS, Margarete Franziska, 57392 Schmallenberg (DE)
(74) Vertreter: Bauer, Dirk
(86) Internationale Anmeldenummer: PCT/EP2012/072561
(87) Internationale Veröffentlichungsnummer: WO 2013/072338

(56) Entgegenhaltungen:
- EP-A1- 0 144 187
- EP-A1- 2 268 102
- EP-A2- 2 400 814
- DE-A1- 19 819 900
- DE-U1-202010 009 208
- US-A- 4 429 216
- US-A- 4 845 343
- US-A1- 2007 295 714

## Beschreibung

Die Erfindung betrifft zunächst einen Raum in einem Gebäude mit einem Heizelement, das auf eine Wand des Raums aufgebracht ist und einen flächigen Träger aus einem flexiblen Textil aufweist, in das Kontakte eingearbeitet und auf das Kohlenstoffnanoröhren in einer wässrigen Dispersion aufgetragen sind, wobei das Wasser verdunstet ist und wobei die Kohlenstoffnanoröhren durch Anlegen einer elektrischen Spannung an die Kontakte zur Infrarot-Emission anregbar sind. Die Erfindung betrifft weiterhin ein Verfahren zum Herstellen eines solchen Raums.

Kohlenstoffnanoröhren ("carbon nanotubes", CNT) sind winzige Kohlenstoffröhrchen, die elektrischen Strom leiten, wenn eine Spannung angelegt wird, wobei ihre Leitfähigkeit die von Kupfer deutlich übersteigt. Beim Stromdurchfluss werden CNT energetisch angeregt und emittieren beim Rückfall auf den ursprünglichen Zustand mit einem energetischen Wirkungsgrad von über 95 vH Wärmestrahlung im fernen Infrarotbereich. CNT sind damit besonders geeignet zum Heizen von Räumen, da der Mensch sehr gut auf diese Art der Wärmestrahlung reagiert.

DE 20 2010 009 208 U1 offenbart einen Raum der einleitend genannten Art mit einem CNT-basierten Heizelement als - auch überstreichbare - Tapete.

Zur Herstellung eines CNT-basierten Heizelements schlägt DE 20 2011 001 126 U1 vor, die Kohlenstoffnanoröhren in einer Emulsion eines verdunstenden Lösungsmittels mit einem erhärtenden Kunststoff unmittelbar auf eine entsprechend vorbereitete Wand des Raums als flächigen Träger aufzubringen und gegebenen Falls raumseitig mit einer textilen Verstärkung zum Schutz gegen Abrieb zu versehen.

CNT-basierte Heizelemente mit separatem flächigem Träger, der Kohlenstoffnanoröhren sowie eine Mehrzahl von Kontakten trägt, wobei die Kohlenstoffnanoröhren durch Anlegen einer elektrischen Spannung an die Kontakte zur Infrarot-Emission anregbar sind, sind weiterhin aus DE 10 2009 008 967 B4, DE 10 2009 034 306 A1, DE 20 2006 007 228 U1, DE 20 2007 014 328 U1, DE 20 2005 014 678 U1, DE 20 2008 007 815 U1, DE 20 2009 000 136 U1 sowie aus WO 2007/089118 A1 bekannt. Die Träger dieser CNT-basierten Heizelemente sind starr, so dass die Heizelemente als separate Bauteile vor eine Wand des Gebäudes montiert werden können.

### Aufgabe

Der Erfindung liegt die Aufgabe zugrunde, ein vereinfachtes Heizelement vorzuschlagen.

### Lösung

Ausgehend von den bekannten Heizelementen wird nach der Erfindung vorgeschlagen, dass der Träger ein Glasfaser-Armierungsnetz und gespachtelt ist.

Das Textil ist ein flächiger Verbund von Fasern und kann mit den Kohlenstoffnanoröhren insbesondere in einer ein- bis zehnprozentigen Dispersion durch Sprühen, Tauchen, Drucken oder Pinseln vor dem oder auch durch Sprühen oder Pinseln im Anschluss an das Aufbringen auf die Wand ausgerüstet werden. Die Ausrüstung kann in mehreren Schritten erfolgen, um die Dichte der Kohlenstoffnanoröhren zu steigern. Die Ausrüstung kann auch gezielt ungleichmäßig - beispielsweise mit in einer Richtung ansteigender Dichte der Kohlenstoffnanoröhren - erfolgen, um in einer Raumrichtung wechselndem Wärmebedarf Rechnung zu tragen.

Die in das Textil eingearbeiteten Kontakte gewährleisten einerseits auch im Betrieb des Heizelements mit wechselnden Temperaturen eine gleich bleibend gute Kontaktierung der Kohlenstoffnanoröhren. Durch die Einarbeitung ist gewährleistet, dass die Kontakte vollständig mit Nanotubes beschichtet sind und so ein optimaler elektrischer Kontakt vorliegt mit minimalem Übergangswiderstand. Bei einem schichtweisen Aufbau ist dies nicht gegeben. Andererseits kann das Heizelement so besonders einfach zur Montage auf eine Wand vorgefertigt werden.

Das Textil in einem erfindungsgemäßen Raum ist ein Glasfaser-Armierungsnetz. Die Verarbeitung von Glasfasermatten in unterschiedlichen Ausprägungen ist an Wänden von Gebäuden ist allgemein bekannt.

Vorzugsweise ist in einem erfindungsgemäßen Raum das Textil ein Gewebe mit Kett- und Schussfäden. Gewebe weisen eine besonders gleichmäßige Oberfläche und darüber hinaus eine besonders geringe Dicke auf.

In einem solchen erfindungsgemäßen Raum sind bevorzugt die Kontakte als Kett- oder Schussfäden fadenförmig in das Gewebe eingearbeitet.

Besonders bevorzugt bestehen in einem erfindungsgemäßen Raum die Kontakte aus Kupfer. Alternativ kann grundsätzlich jedes leitfähige Material für die Kontakte zum Einsatz kommen, insbesondere auch Silber oder versilberte Kupferfäden, vorzugsweise mit zehn bis 20 Adern.

Ausgehend von den bekannten Verfahren wird nach der Erfindung vorgeschlagen, dass der Träger ein Glasfaser-Armierungsnetz ist und gespachtelt wird. Das erfindungsgemäße Verfahren, durch das ein vorstehend beschriebener Raum hergestellt wird, zeichnet sich gleichfalls durch dessen Vorteile aus. Das Aufbringen des textilen Trägers auf die Wand vereinfacht und beschleunigt - gegenüber dem bekannten Aufbringen eines erhärtenden Kunststoffs - signifikant die Montage eines CNT-basierten Heizelements. Wie im Stand der Technik für die Verarbeitung von Armierungsnetzen bekannt, kann der Träger beispielsweise auf die Wand geklebt oder genagelt werden.

Weiterhin kann in einem erfindungsgemäßen Verfahren im Anschluss an das Auftragen der Kohlenstoffnanoröhren auf das Textil auf dieselbe Weise eine wasserabweisende und elektrisch isolierende Schutzschicht aufgetragen werden. Ein derart ausgerüstetes Textil kann dann insbesondere mit wasserhaltigen Materialien weiterbehandelt, beispielsweise überstrichen oder unter Verwendung von handelsüblichem Kleister tapeziert werden.

In einem erfindungsgemäßen Verfahren kann vorteilhafter Weise das Heizelement übertapeziert oder gefliest werden. Das Heizelement wird so einerseits vollständig kaschiert und ist von der übrigen Wand nicht zu unterscheiden. Ein solches erfindungsgemäßes Heizelement ist besonders für Räume geeignet, die aus Gründen des Denkmalschutzes nicht anderweitig geheizt werden können. Das erfindungsgemäße Verfahren eignet sich aber sowohl für die Ausrüstung von Neubauten, als auch für die Altbausanierung.

Alternativ kann das Heizelement auch ohne Abdeckung auf der Wand belassen oder mit einer für infrarote Strahlung durchlässigen Kaschierung versehen werden. Auf diese Weise kommt besonders für therapeutische Zwecke die spezifische Strahlungscharakteristik der Kohlenstoffnanoröhren zur Geltung.

Die raumseitige Oberfläche der Wand kann auch als Dekor mit unter Infrarotlicht leuchtenden oder ihre Farbe ändernden Pigmenten ausgerüstet werden. Wenn die Kohlenstoffnanoröhren in einem dekorativen Muster wechselnder Dichte auf das Textil aufgebracht sind, so wird dieses Muster im Betrieb des Heizelements sichtbar.

Weiterhin kann der Träger z. B. in Dämmputz als Unterlage eingespachtelt werden, sodass die Dämmwirkung gesteigert wird und auf eine Aussendämmung verzichtet werden kann. Andere Dämmmaterialien als Untergrund sind auch möglich.

### Ausführungsbeispiel

Die Erfindung wird nachfolgend anhand eines Ausführungsbeispiels erläutert. In einem erfindungsgemäßen Raum basiert der Träger auf einem gewebten Textil aus Glasfaserfäden mit einer Maschenweite von 4 x 4 mm und mit einer Breite von 1 m als endlose Rollenware. Das Textil weist flächige Kontaktbereiche auf, in denen für jeweils zehn aufeinanderfolgende Schussfäden mit möglichst geringem Abstand mindestens fünf Kupferfäden anstelle der Glasfaserfäden eingewebt sind.

Die Rollenware ist für die Herstellung von Matten konfiguriert, die jeweils an zwei gegenüberliegenden Rändern und dazwischen in der Mitte einen Kontaktbereich aufweisen: Auf einen ersten Kontaktbereich folgt in Richtung der Kettfäden ein Zwischenbereich mit einer Breite von 30 cm, in einer anderen Ausführung knapp 50 cm, ein zweiter Kontaktbereich mit einem weiteren Zwischenbereich und ein dritter Kontaktbereich, an den sich ein Trennbereich mit einer Breite von 5 cm anschließt.

Auf das fertig gewebte Textil werden Kohlenstoffnanoröhren in einer dreiprozentigen wässrigen Dispersion durch Drucken oder Tauchen aufgetragen. Durch wiederholte Beschichtung werden drei verschiedene Textile mit unterschiedlichen elektrischen Widerständen für unterschiedliche Versorgungsspannungen - ein Widerstand von 2 bis 3 Ω für 12 V, von 10 bis 12 Ω für 48 V und von 150 bis 170 Ω für 230 V Versorgungsspannung - hergestellt. Die Heizelemente erreichen dann Oberflächentemperaturen von 35 bis 40 °C, für größere Räume und Hallen auch 50 °C und mehr.

Die Ausrüstung der Textile wird durch entsprechendes Auftragen einer wasserabweisenden und elektrisch isolierenden Schutzschicht aus Styrol-Butadien oder Polyurethan, in einer anderen Ausführung auch aus Latex abgeschlossen. Anschließend wird der mit den Kohlenstoffnanoröhren und der Schutzschicht ausgerüstete Träger in den Trennbereichen in Matten geschnitten. Zur Fertigstellung der Heizelemente werden an den Kontaktbereichen Klemmstecker als elektrische Anschlüsse angebracht.

Drei bis vier derart vorkonfektionierte Heizelemente werden im Rohbau eines Gebäudes oder in einer bestehenden Wohnung auf die Innenwände jedes Raumes geklebt oder mechanisch an der Wand befestigt, mit Kalk- oder Lehmputz eingespachtelt und bei Bedarf übertapeziert. Die Anschlüsse werden aus dem Putz herausgeführt oder mit gleichfalls unter Putz liegenden Versorgungsleitungen verbunden.

Die Heizelemente können seriell oder parallel angeschlossen werden, bei parallelem Anschluss kann jedes Heizelement einzeln angesteuert werden. Die Heizelemente können über Temperaturfühler bei eingestellten Raumtemperaturen und/oder über eine selbstlernende Regelung ein- und ausgeschaltet werden.

Die Heizleistung jedes Heizelements (oder aller Heizelemente eines Raumes oder einer anderen Einheit) kann über die Anschlussspannung geregelt oder durch unterschiedliche Verschaltung der Kontakte gesteuert werden: Gegenüber dem Standardfall, in dem die Betriebsspannung zwischen den beiden äußeren Kontakte anliegt, werden der Widerstand halbiert und die Heizleistung verdoppelt, wenn die Betriebsspannung zwischen dem mittleren und nur einem der äußeren Kontakte anliegt. Entsprechend wird gegenüber demselben Standardfall der Widerstand geviertelt und die Heizleistung vervierfacht, wenn die Betriebsspannung zwischen dem mittleren und beiden äußeren Kontakten anliegt.

## Patentansprüche

1. Raum in einem Gebäude mit einem Heizelement, das auf eine Wand des Raums aufgebracht ist und einen flächigen Träger aus einem flexiblen Textil aufweist, in das Kontakte eingearbeitet und auf das Kohlenstoffnanoröhren in einer wässrigen Dispersion aufgetragen sind, wobei das Wasser verdunstet ist und wobei die Kohlenstoffnanoröhren durch Anlegen einer elektrischen Spannung an die Kontakte zur Infrarot-Emission anregbar sind, ***dadurch gekennzeichnet, dass*** der Träger ein Glasfaser-Armierungsnetz und gespachtelt ist.

2. Raum nach dem vorgenannten Anspruch, ***dadurch gekennzeichnet,* dass** das Textil ein Gewebe mit Kett- und Schussfäden ist.

3. Raum nach dem vorgenannten Anspruch, ***dadurch gekennzeichnet, dass*** die Kontakte als Kett- oder Schussfäden fadenförmig in das Gewebe eingearbeitet sind.

4. Raum nach einem der vorgenannten Ansprüche, ***dadurch gekennzeichnet, dass*** die Kontakte aus Kupfer bestehen.

5. Verfahren zum Herstellen eines Raums in einem Gebäude, wobei ein Heizelement mit einem flächigen Träger aus einem flexiblen Textil auf eine Wand des Raums aufgebracht wird, wobei Kontakte in das Textil eingearbeitet und Kohlenstoffnanoröhren in einer wässrigen Dispersion auf das Textil aufgetragen werden, die durch Anlegen einer elektrischen Spannung an die Kontakte zur Infrarot-Emission anregbar sind, und wobei das Wasser verdunstet wird, ***dadurch gekennzeichnet, dass*** der Träger ein Glasfaser-Armierungsnetz ist und gespachtelt wird.

6. Verfahren nach dem vorgenannten Anspruch, ***dadurch gekennzeichnet, dass*** im Anschluss an das Auftragen der Kohlenstoffnanoröhren auf das Textil eine wasserabweisende und elektrisch isolierende Schutzschicht aufgetragen wird.

7. Verfahren nach einem der Ansprüche 6 oder 7, ***dadurch gekennzeichnet, dass*** das Heizelement übertapeziert oder gefliest wird.

## Claims

1. A room in a building with a heating element, which is affixed onto a wall of the room, and has a two-dimensional substrate consisting of a flexible textile, into which contacts are incorporated, and onto which carbon nano-tubes are applied in an aqueous dispersion, wherein the water is evaporated, and wherein for purposes of infrared emission the carbon nano-tubes can be excited by the application of an electrical voltage onto the contacts, **characterised in that** the substrate is a glass fibre reinforcement mesh and is filled.

2. The room according to the above-cited claim, **characterised in that** the textile is a weave with warp and weft threads.

3. The room according to the above-cited claim, **characterised in that** the contacts are incorporated in the form of threads into the weave as warp or weft threads.

4. The room according to any one of the above-cited claims, **characterised in that** the contacts consist of copper.

5. A method for the manufacture of a room in a building, wherein a heating element with a two-dimensional substrate consisting of a flexible textile is affixed onto a wall of the room, wherein contacts are incorporated into the textile and carbon nano-tubes are applied onto the textile in an aqueous dispersion; for purposes of infrared emission the latter can be excited by the application of an electric voltage onto the contacts, and wherein the water is evaporated, **characterised in that** the substrate is a glass fibre reinforcement mesh and is filled.

6. The room according to the above-cited claim, **characterised in that** subsequent to the application of the carbon nano-tubes onto the textile a water-repellent and electrically insulating protective layer is applied.

7. The method according to any one of the claims 6 or 7, **characterised in that** the heating element is papered over or tiled.

## Revendications

1. Pièce dans un bâtiment, comportant un élément chauffant qui est appliqué sur un mur de la pièce et présente un support superficiel en textile souple dans lequel des contacts sont incrustés et sur lequel des nanotubes de carbone sont appliqués dans une dispersion aqueuse, l'eau étant évaporée et les nanotubes de carbone pouvant être excités par application d'une tension électrique sur les contacts pour l'émission d'infrarouges, **caractérisée en ce que** le support est un filet d'armure en fibres de verre et est mastiqué.

2. Pièce selon la revendication précédente, **caractérisée en ce que** le textile est une toile à fils de chaîne et de trame.

3. Pièce selon la revendication précédente, **caractérisée en ce que** les contacts sont incrustés à la manière de fils sous forme de fils de chaîne et de trame dans la toile.

4. Pièce selon une des revendications précédentes, **caractérisée en ce que** les contacts sont en cuivre.

5. Procédé de réalisation d'une pièce dans un bâtiment, dans lequel un élément chauffant est appliqué avec un support superficiel en textile souple sur une paroi de la pièce, des contacts étant incrustés dans le textile et des nanotubes de carbone qui peuvent être excités par application d'une tension électrique au niveau des contacts pour l'émission d'infrarouges sont appliqués dans une dispersion aqueuse sur le textile et l'eau étant évaporée, **caractérisé en ce que** le support est un filet d'armure en fibres de verre et est mastiqué.

6. Procédé selon la revendication précédente, **caractérisée en ce que**, après l'application des nanotubes de carbone sur le textile, une couche protectrice déperlante et assurant une isolation électrique est appliquée.

7. Pièce selon une des revendications 6 ou 7, **caractérisée en ce que** l'élément chauffant est recouvert de tapisserie ou de carrelage.
